# EUROPEAN PATENT APPLICATION

(11) **EP 2 781 836 A2**
(43) Date of publication of application: **24.09.2014**
(21) Application number: 14160970.1
(22) Date of filing: 20.03.2014
(51) Int. Cl.: F23D 14/04, F23D 14/66, F23D 14/62

(54) **Energy-saving fuel gas system**

(30) Priority: 22.03.2013 TW 102110168
(71) Applicant: Huang, Shang-Yuan, New Taipei City 235 (TW)
(72) Inventor: Huang, Shang-Yuan, New Taipei City 235 (TW)
(74) Representative: Lang, Christian

(57) **Abstract**

The invention relates to an energy-saving fuel gas system (1), which provides a two coexisted mechanisms comprising a premixing mode of a premixing module (20) and a diffuse-blend mode of a diffuse-blend module (30). A suitable fuel, which is produced by the mixing reaction of fuel molecule and oxidative molecule to be completed by a helical or scroll type premixing module, is guided to flow into the diffuse-blend module (30) via a fairing hood (40) for a secondary scroll air-mixing treatment and then is performed with a combustion chemical reaction by the flames on the fire board (32). The combustion reaction temperature of the suitable fuel is effectively increased by the heat accumulation effect of the fire board to heat up and expand the subsequent suitable fuel, thereby thinning flammable molecule to have a maximum air-fuel ratio and breaking down minute quantity of water molecule in air into supplemental fuel and combustion assistant to attain an optimum energy-saving efficiency.

## Description

### BACKGROUND OF THE INVENTION

### Field of the Invention

The present invention relates to an energy-saving fuel gas system, and in particular relates to an energy-saving fuel gas system providing a premixing mode and a diffuse-blend mode which are coexisted.

### Description of the Related Art

In general, combustion is an exothermic chemical reaction which is produced by a mixture of a fuel gas and a combustion-supporting gas to be presented by flames. For example, in a device system (referred as a fuel gas system hereinafter) such as a gas stove and a water heater, a fuel gas is burned to produce heat energy for heating a desired substance. As to the fuel gas system, a fuel gas and a combustion-supporting gas (e.g., oxygen) must be consumed during the combustion reaction. An incomplete combustion is formed if the fuel gas and the combustion-supporting gas cannot be sufficiently mixed, and a desired heat energy still can be produced during the incomplete combustion process by consuming more fuel gas.

In conventional fuel gas systems, a current premixing method is that a fuel gas and a combustion-supporting gas are mixed in advance, and then a mixture of the fuel gas and the combustion-supporting gas is provided for combustion in a chemical reaction. That is, the premixing method represents that fuel molecule and oxide molecule must be mixed in advance prior to combustion reaction, and a fuel gas combustion efficiency is determined by the mixing product. In the current premixing methods, a fuel gas is injected into a gas-mixing pipe in a direct way from a jet head to simultaneously entrant an ambient air therewith, and finally the mixture of the fuel gas and the air is transmitted to a combustion site (a combustion end). However, this method cannot provide sufficient reaction space or time for mixing the fuel gas and the combustion-supporting gas, resulting in an incomplete utilization of fuel gas (incomplete combustion) and wasting resources.

### BRIEF SUMMARY OF THE INVENTION

In view of this, the invention provides an energy-saving fuel gas system comprising a premixing mode and a diffuse-blend mode which are coexisted. Accordingly, the mixing of the fuel gas and the air (the combustion-supporting gas) can be more complete, the combustion reaction temperature of the suitable fuel is effectively increased by the heat accumulation effect of the fire board to heat up and expand the subsequent suitable fuel, thereby thinning flammable molecule to have a maximum air-fuel ratio and producing chimney effect to break down water molecule in air into supplemental fuel and combustion assistant to attain an optimum energy-saving efficiency.

To attain the above purposes, the energy-saving fuel gas system comprises a premixing module, a diffuse-blend module and a fairing hood. The premixing module comprises a pipe body, at least one first combustion-supporting gas inlet and a fuel gas injection unit. The pipe body provides a premixing space therein. The first combustion-supporting gas inlet is provided for allowing a combustion-supporting gas to flow into the pipe body. The fuel gas injection unit disposed on one end of the pipe body is located at a first side of the premixing space of the pipe body so as to supply and inject a fuel gas into the premixing space of the pipe body and to cause the fuel gas for traveling in the premixing space of the pipe body in a helical or scroll path. The diffuse-blend module, which is located at a second side of the premixing space of the premixing module relative to the fuel gas injection unit of the premixing module, comprises an upper seat body which is provided with a diffuse-blend space and a fire board which is disposed in the upper seat body, located above the diffuse-blend space and opened with a plurality of flame holes. A fairing hood, which is connected to the upper seat body of the diffuse-blend module and located between the premixing space of the premixing module and the diffuse-blend space of the diffuse-blend module, comprises a centrally-opened fairing hole. The fairing hole is provided for allowing the fuel gas and the combustion-supporting gas to be mixed in the premixing space of the premixing module to flow into the diffuse-blend space of the diffuse-blend module.

With the helical or scroll air-mixing mechanism formed by the fuel gas injection unit of the invention, the injected fuel gas and the air are mixed to form a suitable fuel in the premixing space. Further, with the flames on the fire board to perform a combustion chemical reaction, the combustion reaction temperature of the suitable fuel is effectively increased by the heat accumulation effect of the fire board to heat up and expand the subsequent suitable fuel, thereby thinning flammable molecule to have a maximum air-fuel ratio and producing chimney effect to break down water molecule in air into supplemental fuel and combustion assistant to attain an optimum energy-saving efficiency.

Preferably, the fuel gas injection unit of the premixing module which is disposed on one end of the pipe body of the premixing module near to a pipe wall thereof is provided with a fuel gas injection port utilized to obliquely inject the fuel gas so that the fuel gas injected into the premixing space of the pipe body travels in the helical path, and the at least one first combustion-supporting gas inlet of the premixing module disposed on the pipe wall of the pipe body of the premixing module is located below the fuel gas injection port of the fuel gas injection unit of the premixing module.

Preferably, an included angle ranging from 45 to 85 degrees can be formed between the fuel gas injection port of the fuel gas injection unit of the premixing module and a horizontal plane.

Preferably, the premixing module further comprises a disk body which is disposed on one end of the pipe body and provided with the at least one first combustion-supporting gas inlet, the fuel gas injection unit is disposed on the disk body and is provided with a fuel gas injection port, and the at least one first combustion-supporting gas inlet of the disk body is located around the fuel gas injection port of the fuel gas injection unit.

Preferably, the fuel gas injection unit of the premixing module is provided with a guide slot and an arcuate passage connected to a bottom of the guide slot provided for allowing the fuel gas to flow into the guide slot, and the fuel gas injection port is provided on a top of the guide slot of the fuel gas injection unit so that the fuel gas injected into the premixing space of the pipe body travels in the scroll path.

Preferably, the pipe body of the premixing module can be a venturi tube, and a bunch part is provided on one end of the pipe body of the premixing module which is near to the diffuse-blend space of the diffuse-blend module, thereby limiting the suitable fuel to flow in a direction from the premixing space toward the diffuse-blend space.

Preferably, the fuel gas injection port of the fuel gas injection unit is further connectively disposed with a flow control mechanism, thereby controlling the flow rate and the amplitude of the injected fuel gas.

Preferably, the energy-saving fuel gas system further comprises an outer housing including a base seat opened with at least one second combustion-supporting gas inlet, in which the premixing module arranged in the outer housing is connected to the base seat of the outer housing, and the upper seat body of the diffuse-blend module is connected to the outer housing at one side thereof where is opposite to that of the base seat of the outer housing to be located. Accordingly, with the outer housing, backfire from flames in the combustion process can be prevented.

Preferably, the fairing hood comprises an arcuate recessed flange concave to the diffuse-blend space of the diffuse-blend module, thereby enabling the suitable fuel produced from the premixing space and the air located in the outer housing to smoothly flow into the diffuse-blend space.

Preferably, the fire board can be further made of ceramic material, thereby rapidly attaining a predetermined high temperature in a combustion reaction.

Preferably, the flow control mechanism comprises a needle body capable of being operated relative to the fuel gas injection port of the fuel gas injection unit and a guide bar being directly or indirectly connected to the needle body. With the needle body driven by the guide bar, a user can open or close the fuel gas injection port of the fuel gas injection unit or to regulate the fuel gas injection port of the fuel gas injection unit for controlling the flow rate of injected fuel gas.

Preferably, the flow control mechanism further comprises a linkage which is provided with a fixed point and two ends respectively connected to the guide bar and a finger-dialing member, so that the linkage is rotated by taking the fixed point as an axis. With an appropriate proportional arrangement of between the guide bar and the linkage, a user can conveniently open or close the fuel gas injection port or to regulate the fuel gas injection port for controlling the flow rate of injected fuel gas by controlling finger-dialing member disposed on an external control panel at a small span.

Preferably, the guide bar is provided with an elongated hole at a location where is connected to the linkage, or the linkage is provided with an elongated hole at a location where is connected to the guide bar, thereby attaining an optimum linking effect.

Preferably, the energy-saving fuel gas system further comprises a preheating pipeline which is connected to the fuel gas injection unit for increasing the temperature of the fuel gas when the fuel gas enters the arcuate passage of the fuel gas injection unit of the premixing module, capable of cooperating other types of fuels for use. With the preheating pipeline to increase the temperature of the fuel gas in advance, the fuel molecule can be acceleratingly thinned and converted into a gas-state fuel to flow into the arcuate passage, thereby effectively reducing the time required by the heating of the subsequent fuel gas, attaining complete combustion of the fuel and promoting the entire efficiency.

Preferably, the preheating pipeline can be disposed in the diffuse-blend space of the diffuse-blend module. With the high heat energy stored in the diffuse-blend space of the diffuse-blend module to offer a preheat effect, the energy required in the preheating process can be effectively saved.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:
Fig. 1 is a perspective schematic view illustrating a first embodiment of the invention;
Fig. 2 is an exploded schematic view of elements of the first embodiment of the invention;
Fig. 3 is a sectional structural schematic view of the first embodiment of the invention;
Fig. 4 is a lateral schematic view of a gas mixing path of a premixing module of the first embodiment of the invention;
Fig. 5 is a top schematic view of a gas mixing path of a premixing module of the first embodiment of the invention;
Fig. 6 is a schematic view of a gas mixing path of a diffuse-blend module of the first embodiment of the invention;
Fig. 7 is an exploded schematic view of elements of a second embodiment of the invention;
Fig. 8 is a sectional structural schematic view of a premixing module of the second embodiment of the invention;
Fig. 9 is a top schematic view of a fuel gas injection unit and a disk body of the second embodiment of the invention;
Fig. 10 is a sectional enlarged schematic view of the fuel gas injection unit and the disk body of the second embodiment of the invention;
Fig. 11 is a lateral schematic view of a gas mixing path of a premixing module of the second embodiment of the invention;
Fig. 12 is a schematic view showing a flow path of scrolls of a fuel gas formed in a guide slot and an arcuate passage in the second embodiment of the invention;
Fig. 13 is a schematic view showing a gas flow of the second embodiment of the invention;
Fig. 14 is a perspective schematic view of a further improvement of the second embodiment of the invention;
Fig. 15 is a sectional schematic view of the further improvement of the second embodiment of the invention;
Fig. 16 is a schematic view showing a needle valve operably driven by a guide bar;
Fig. 17 is a schematic view showing the needle valve operably driven by the guide bar; and
Fig. 18 is a schematic view showing an operation relationship of a guide bar and a linkage.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

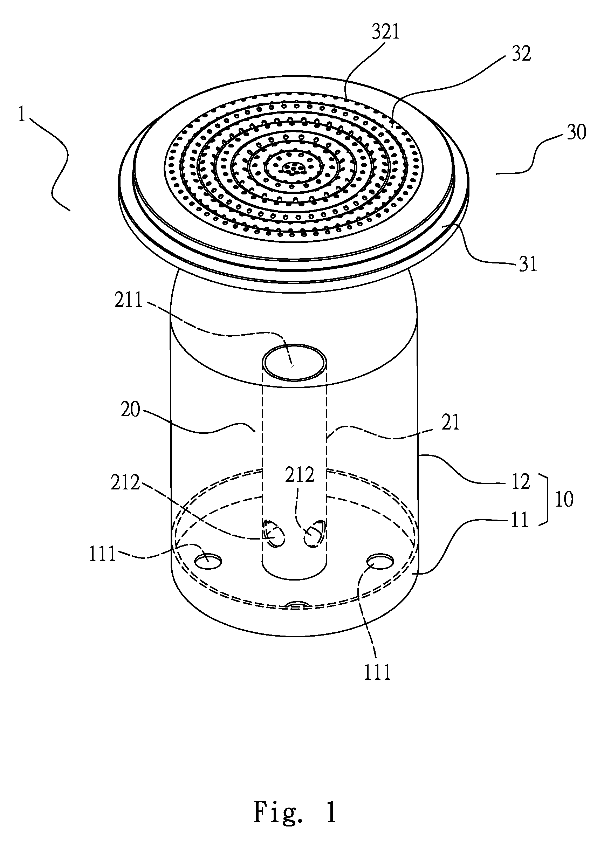

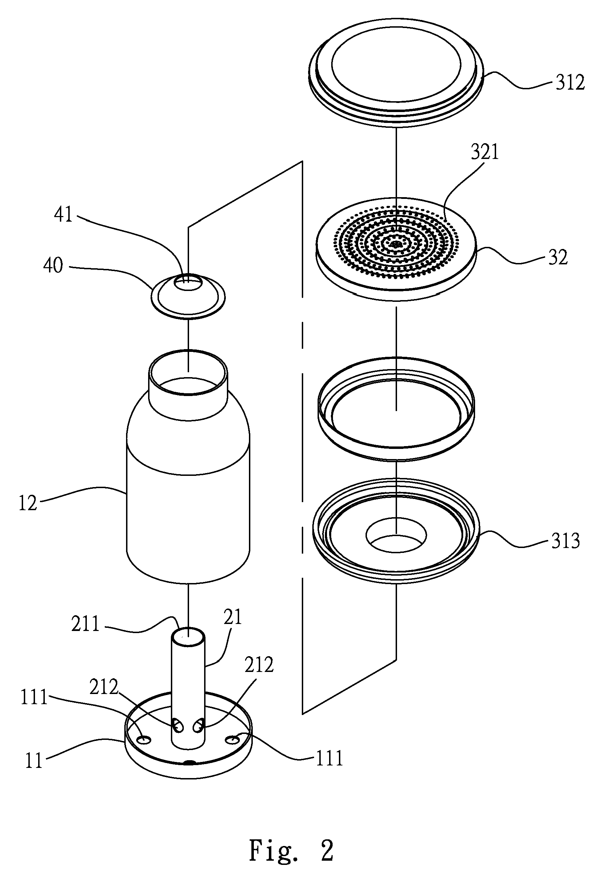

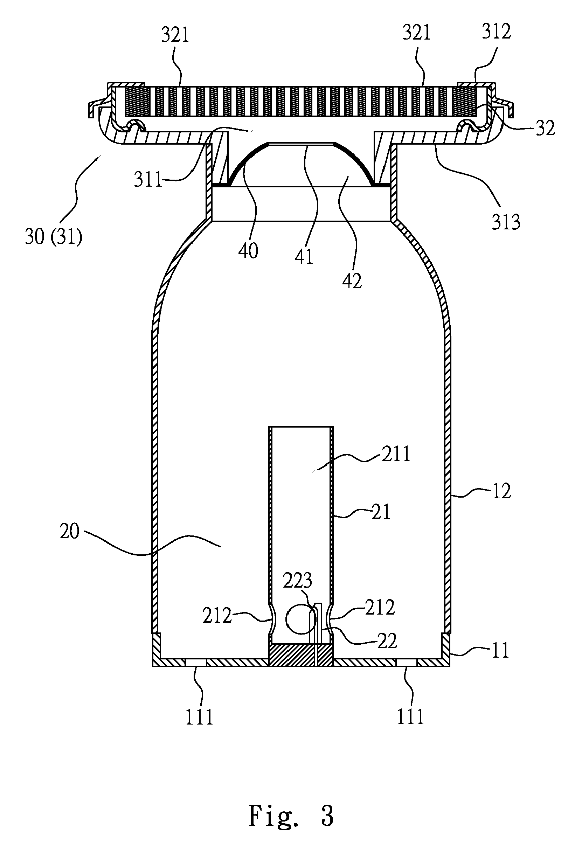

Figs. 1, 2 and 3 are schematic views showing an energy-saving fuel gas system 1 of a first embodiment of the invention. The energy-saving fuel gas system 1 comprises an outer housing 10, a premixing module 20, a diffuse-blend module 30 and a fairing hood 40. The outer housing 10 comprises a base seat 11 and a side housing 12. The premixing module 20 comprises a pipe body 21 providing a premixing space 211 therein, at least one first combustion-supporting gas inlet 212 provided for allowing a combustion-supporting gas to flow into the pipe body 21, and a fuel gas injection unit 22 disposed on one end of the pipe body 21 and located at a first side of the premixing space 211 of the pipe body 21, in which the premixing space 211 of the pipe body 21 is disposed above the fuel gas injection unit 22. In the outer housing 10, the base seat 11 connected under the side housing 12 is opened with at least one second combustion-supporting gas inlet 111. Therefore, external air (such as a combustion-supporting gas) is allowed to flow into the outer housing 10 of the energy-saving fuel gas system 1.

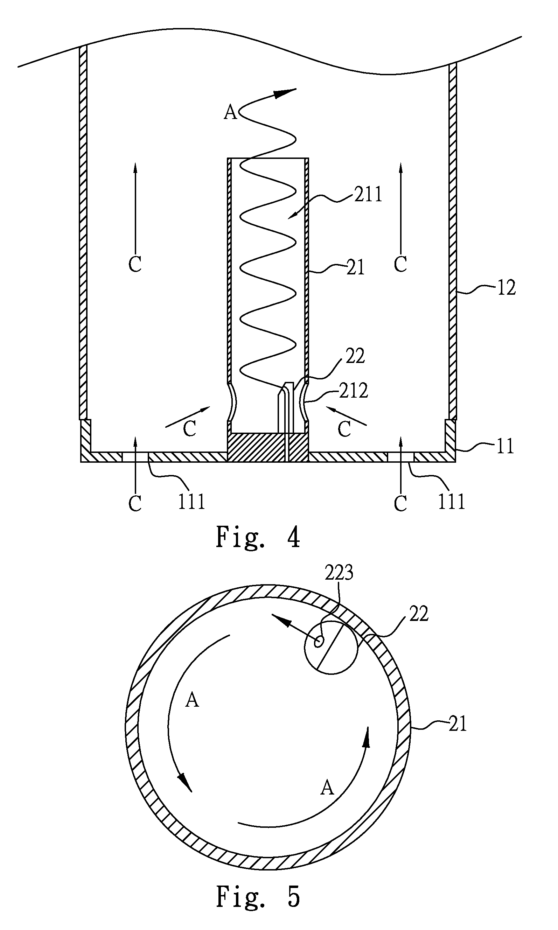

The premixing module 20 is disposed on the base seat 11 of the outer housing 10. The fuel gas injection unit 22 of the premixing module 20, which is disposed on one end of the pipe body 21 of the premixing module 20 near to a pipe wall thereof and disposed on the base seat 11 of the outer housing 10 together with the pipe body 21 of the premixing module 20, is provided with a fuel gas injection port 223 that is utilized to inject the fuel gas into the premixing space 211 of the premixing module 20. In the premixing module 20, the at least one first combustion-supporting gas inlet 212 disposed on the pipe wall of the pipe body 21 is relatively located below the fuel gas injection port 223 of the fuel gas injection unit 22 for allowing air (a combustion-supporting gas) to flow into the pipe body 21 of the premixing module 20. As shown in Figs. 4 and 5, when the fuel gas is injected into the pipe body 21 of the premixing module 20 from the fuel gas injection port 223 of the fuel gas injection unit 22, the injected fuel gas and the air driven by the injected fuel gas are simultaneously traveling in the premixing space 211 of the pipe body 21 in a helical path 'A', thereby mixing the injected fuel gas and the air to form a suitable fuel in the premixing space 211 of the pipe body 21.

The diffuse-blend module 30, which is connected above the side housing 12 of the outer housing 10 and located at a second side of the premixing space 211 of the premixing module 20 relative to the fuel gas injection unit 22 of the premixing module 20, comprises an upper seat body 31 and a fire board 32. The upper seat body 31, which is provided with a diffuse-blend space 311 therein, at least comprises an upper cover 312 and a lower cover 313. The fire board 32, which is disposed in the upper seat body 31 and located above the diffuse-blend space 311, is opened with a plurality of hive-like flame holes 321, thereby discharging a secondary air-mixing suitable fuel for combustion reaction.

The fairing hood 40, which is connected to a lower end of the upper seat body 31 of the diffuse-blend module 30 and located between the premixing space 211 of the premixing module 20 and the diffuse-blend space 311 of the diffuse-blend module 30, comprises a centrally-opened fairing hole 41 and an arcuate recessed flange 42. The arcuate recessed flange 42 is gradually concave to, from the periphery toward the center thereof, the diffuse-blend space 311 of the diffuse-blend module 30. The fairing hole 41 is provided for allowing the fuel gas and the combustion-supporting gas to be mixed in the premixing space 211 of the premixing module 20 to flow into the diffuse-blend space 311 of the diffuse-blend module 30, i.e., the mixed suitable fuel (the fuel gas and the combustion-supporting gas) in the premixing space 211 of the premixing module 20 and the air (the combustion-supporting gas) in the outer housing 10 can be smoothly flowing into the diffuse-blend space 311 of the diffuse-blend module 30 for a secondary scroll air-mixing treatment.

Accordingly, in the energy-saving fuel gas system 1 of the first embodiment, a mechanism of effectively binding a premixing mode and a diffuse-blend mode can be obtained. Besides, a suitable fuel, which is produced by the mixing reaction of fuel molecule and oxidative molecule to be completed in the premixing space 211 of the premixing module 20, is guided into the diffuse-blend space 311 of the diffuse-blend module 30 via the fairing hood 40, so that the diffuse-blend module 30 can be utilized to discharge a secondary air-mixing suitable fuel for combustion reaction. Further, the combustion reaction temperature of the suitable fuel is effectively increased by the heat accumulation effect of the fire board to heat up and expand the subsequent suitable fuel, thereby thinning flammable molecule to have a maximum air-fuel ratio and producing chimney effect to break down water molecule in air into supplemental fuel and combustion assistant to attain an optimum energy-saving efficiency.

As shown in Figs. 4, 5 and 6, in the premixing module 20 of this embodiment, the fuel gas injection unit 22 is disposed in the pipe body 21 near to the pipe wall thereof, and the fuel gas injection port 223 of the fuel gas injection unit 22 having an oblique angel is utilized to obliquely inject the fuel gas into the premixing space 211 of the premixing module 20, thereby allowing the fuel gas to travel in the helical path 'A'. In the conception of this embodiment, the rotating direction of the helical path 'A' can be adjusted in accordance with the usage environment. For example, with difference of interhemispheric natural cyclone regularity, the helical path can be adjusted in a clockwise or counterclockwise direction, and the injection angle of the fuel gas injection port 223 of the fuel gas injection unit 22 can be adjusted. According to the inventor's test result, an included angle ranging from 45 to 85 degrees can be preferably formed between the fuel gas injection port 223 of the fuel gas injection unit 22 of the premixing module 20 and a horizontal plane, thereby providing the premixing mode of the premixing module 20 with optimum efficiency.

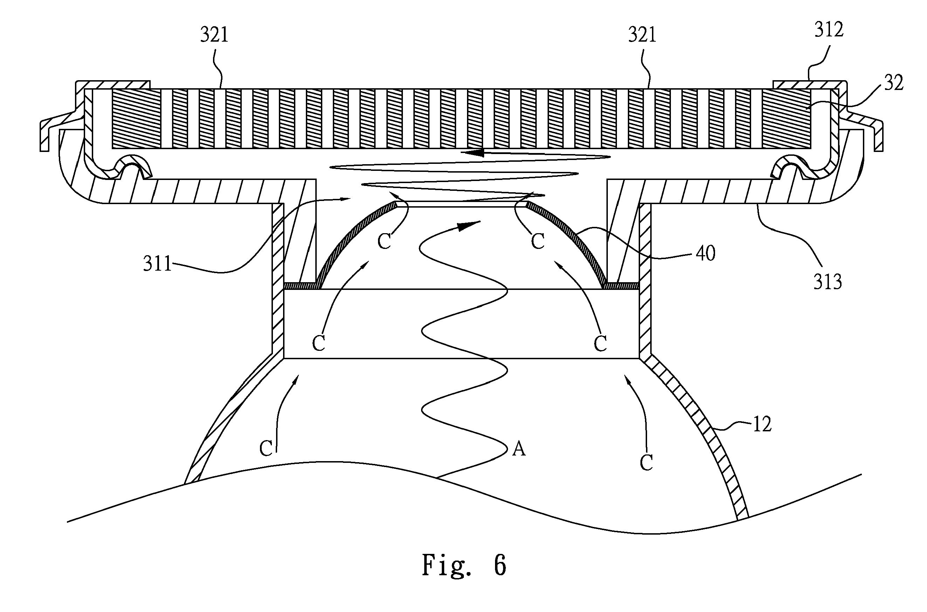

As shown in Figs. 4 and 5, when the fuel gas is injected into the premixing space 211 of the premixing module 20 from the fuel gas injection port 223 of the fuel gas injection unit 22, the air (shown by the air flow path 'C' in the figure) which flows into the second combustion-supporting gas inlet 111 of the base seat 11 at the rear side (i.e., located below the fuel gas injection port 223 of the fuel gas injection unit 22) can be simultaneously driven by an air flow generated from the flowing of the injecting fuel gas to travel in the helical path 'A' for the mixing reaction in the premixing space 211 of the premixing module 20, thus to form the suitable fuel after the oxygen saturation. As shown in Fig. 6, when the suitable fuel mixed in the premixing space 211 of the premixing module 20 flows into the diffuse-blend space 311 of the diffuse-blend module 30 via the fairing hood 40, the air in the outer housing 10 can be simultaneously driven into the diffuse-blend space 311 of the diffuse-blend module 30 (shown by the air flow path 'C' in the figure) by the arcuate recessed flange 42 of the fairing hood 40, and the suitable fuel flows out of the flame holes 321 of the fire board 32 for combustion reaction. When the combustion reaction is in progress, the suitable fuel can be heated to a high temperature by the heat accumulation effect of the fire board 32 to heat up and expand the subsequent suitable fuel flowing into the diffuse-blend space 311 of the diffuse-blend module 30, thereby thinning flammable molecule to have a maximum air-fuel ratio. Further, with the driving of high-temperature fire board 32 to break down water molecule in air into supplemental fuel and combustion assistant, a high performance of energy-saving efficiency can be achieved.

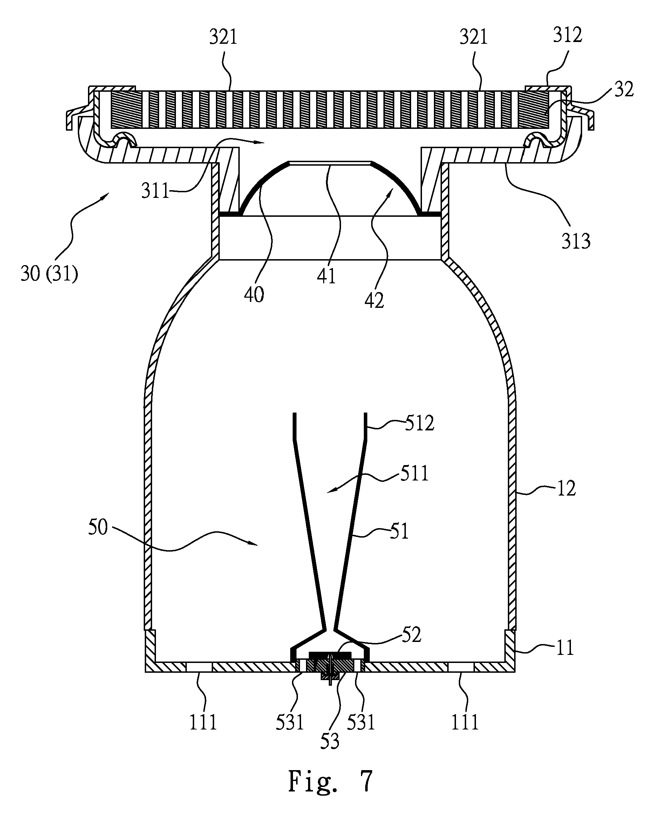

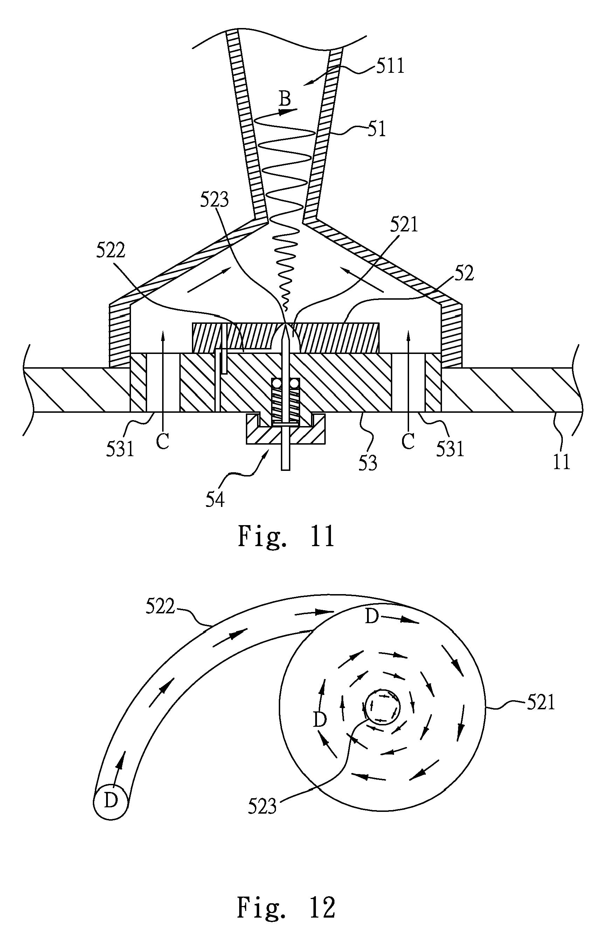

Referring to Figs. 7, 8, 9 and 10, a second embodiment of the invention is illustrated, which has the same principle as the premixing mode and the diffuse-blend mode described in the first embodiment. It must be explained first that the outer housing 10, the diffuse-blend module 30 and the fairing hood 40 described in the second embodiment have the same structure and effects as the first embodiment, and therefore the same descriptions are omitted hereinafter. In the second embodiment, a premixing module 50 mainly comprises a pipe body 51, a fuel gas injection unit 52 and a disk body 53. In this embodiment, the pipe body 51 is a venturi tube comprising a premixing space. A bunch part 512 is provided on one end of the pipe body 51 near to the diffuse-blend space 311 of the diffuse-blend module 30. The disk body 53 disposed on a lower end of the pipe body 51 is connected to the base seat 11 of the outer housing 10 together with the pipe body 51. The fuel gas injection unit 52 disposed above the disk body 53 is located at a central position of the disk body 53. The disk body 53 is opened with a plurality of first combustion-supporting gas inlets 531 located around the fuel gas injection unit 52. The fuel gas injection unit 52 of the premixing module 50 comprises a guide slot 521 and an arcuate passage 522. The guide slot 521 substantially formed as a semi-circular shaped space has a top opened with a fuel gas injection port 523. The arcuate passage 522 has one end connected to one side of the bottom of the guide slot 521 and another end served as a fuel gas feeding port. Referring also to Fig. 12, with the design of the guide slot 521 and the arcuate passage 522 of the premixing module 50, the fuel gas traveling along the curvatures of the arcuate passage 522 and the guide slot 521 can be provided with scrolling effect, and the fuel gas injected into the premixing space 511 of the pipe body 51 from the fuel gas injection port 523 of the guide slot 521 travels in a scroll path 'B'.

In this embodiment, the rotating direction of the scroll path 'B' can be adjusted in accordance with the usage environment. The scroll path 'B' can be adjusted in a clockwise or counterclockwise direction by changing the setting position of the arcuate passage 522, thereby achieving an optimum usage state based on the interhemispheric natural cyclone regularity.

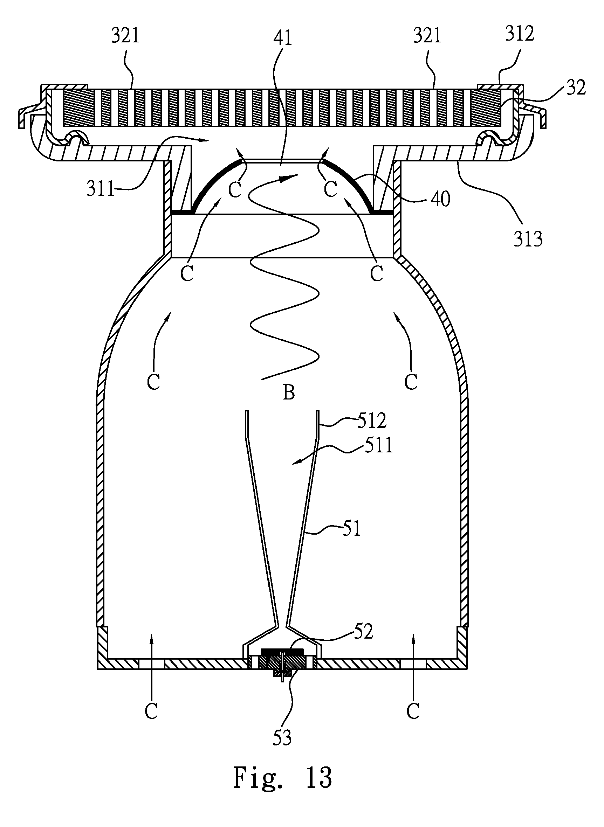

Referring to Figs. 11, 12 and 13, as the same principle mentioned in the first embodiment, the fuel gas is injected into the premixing space 511 of the pipe body 51 from the fuel gas injection port 523 of the guide slot 521 in the second embodiment provides the premixing module 50, and the fuel gas drives the air (shown by the air flow path 'C' in the figure) flowing in from the first combustion-supporting gas inlets 531 of the disk body 53 to simultaneously flow into the premixing space 511 of the pipe body 51 (an upper section of the venturi tube) for the mixing reaction of fuel molecule and oxidative molecule, thereby producing a flammable suitable fuel. As shown in Figs. 11 and 13, a diameter area of the scroll is expanded with respect to the side wall of the venturi tube 51 when the scroll path 'B' travels upwardly, the fuel gas traveling in the premixing space 511 of the pipe body 51 is allowed to have an efficient mixing reaction with the air, and the suitable fuel flows into the diffuse-blend space 311 of the diffuse-blend module 30 at an outflow angle which is controlled by the bunch part 512 located above the pipe body 51.

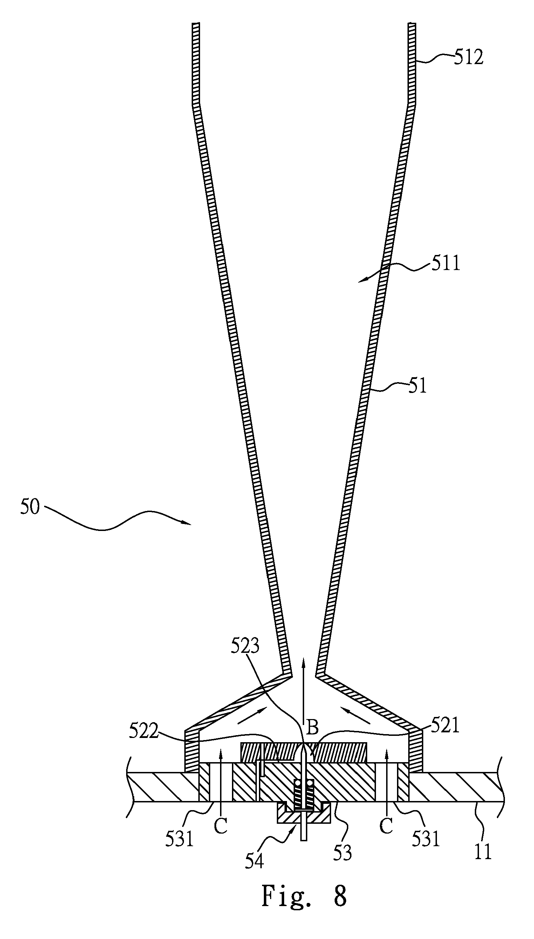

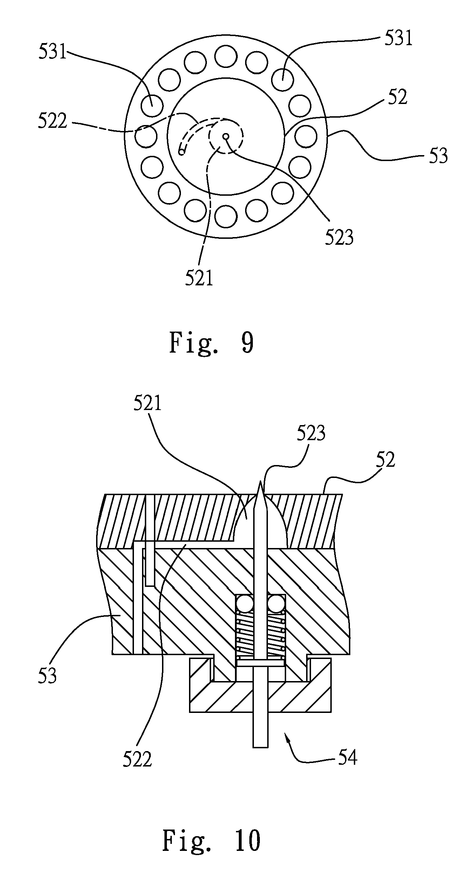

A flow control mechanism 54, which can be further connectively disposed on the fuel gas injection port 523 of the guide slot 521, is utilized to control the flow rate or the amplitude of the injected fuel gas, thereby attaining the air-mixing effect. It must be explained first that the flow control mechanism 54 illustrated in the figures is one of devices used in practical applications, and there still have several valves for regulating the output gas. It is to be understood that the invention is not limited to the disclosed flow control mechanism. As shown in Figs. 8 and 10, the flow control mechanism 54 is provided with a needle body to serve as a valve. The fuel gas is not allowed to pass through the fuel gas injection port 523 of the guide slot 521 when the needle body is fully inserted into the fuel gas injection port 523 of the guide slot 521, thus to attain the purpose of closing effect. The flow rate of the fuel gas passing through the fuel gas injection port 523 of the guide slot 521 can be varied when the needle body is gradually entered into or removed from the fuel gas injection port 523 of the guide slot 521, thus to provide the control flow function. Generally, ball valves or electron valves in current market can be applied to adjust and control the inflow fuel gas.

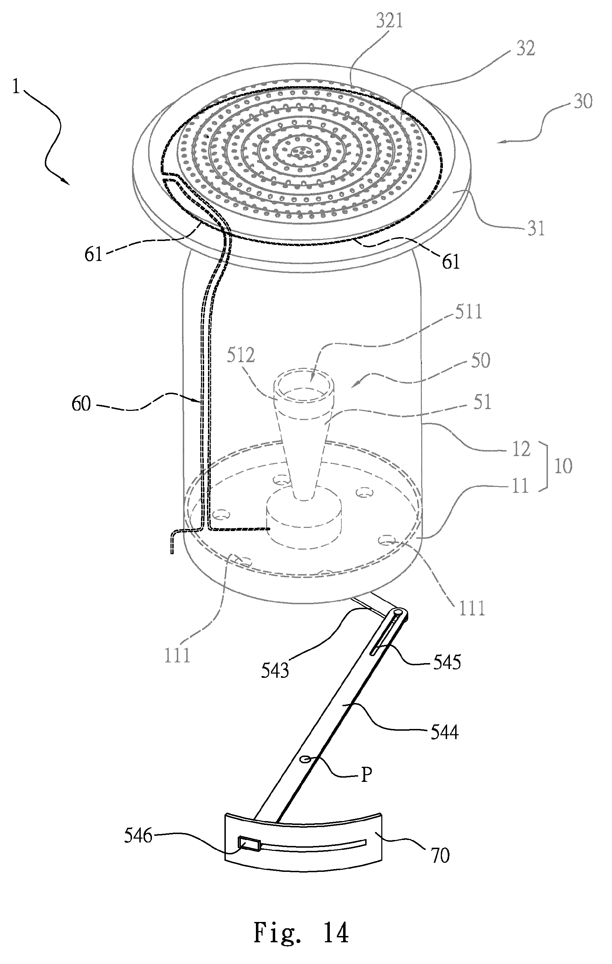

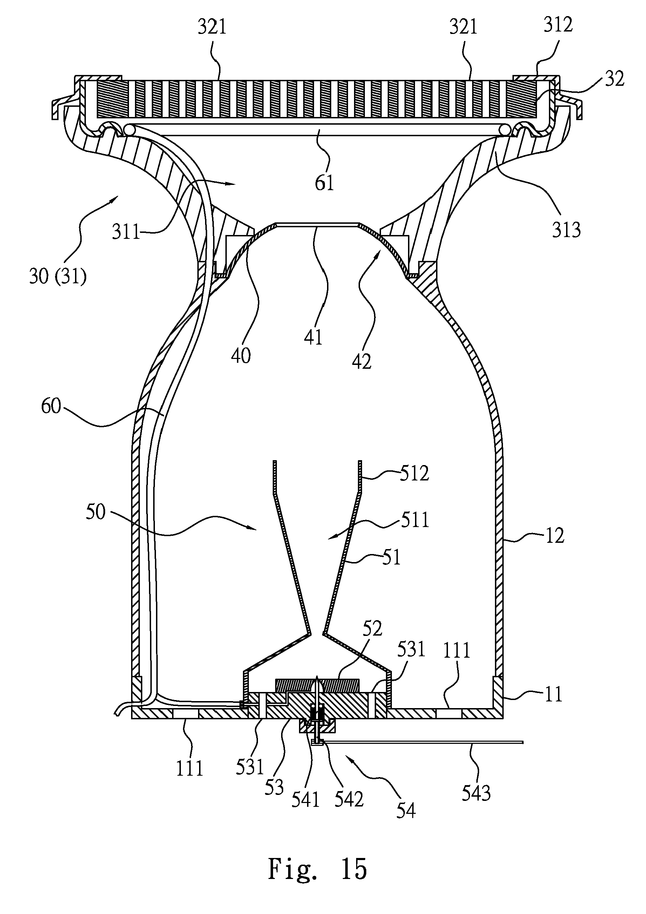

According to the structure of the second embodiment of the invention, a further improvement can be provided. As shown in Figs. 14 and 15, the fuel gas injection unit 52 is further connected with a guide pipeline 60 which is provided to allow the fuel gas to flow into the arcuate passage 522 of the premixing module 50. A preheating pipeline 61, which is capable of being disposed in the guide pipeline 60, is connected to the fuel gas injection unit 52 for increasing the temperature of the fuel gas when the fuel gas enters the arcuate passage 522 of the fuel gas injection unit 52 of the premixing module 50. Accordingly, an efficiency of subsequent air-mixing process and combustion process can be promoted. The flow control mechanism 54 comprises a needle body 541 and a guide bar 542 utilized to open or close the fuel gas injection port 523 of the fuel gas injection unit 52 or to regulate the fuel gas injection port 523 of the fuel gas injection unit 52 for controlling the flow rate of injected fuel gas, thereby promoting the usage convenience.

In Figs. 14 and 15, the guide pipeline 60 is connected to the fuel gas injection unit 52, and the fuel gas is guided into the arcuate passage 522 of the premixing module 50 from the exterior in a single direction. In the process of guiding the fuel gas in the guide pipeline 60, with a preheating mode provided from the preheating pipeline 61 constituted by heat-conducting materials (e.g., copper pipe), the molecule of other states (e.g., a liquid state) of fuels can be acceleratingly thinned and converted and a gas-state fuel can be obtained, and the temperature of the fuel gas can be increased to rapidly and completely perform the mixing and combusting processes when the fuel gas flows into the premixing space 511 of the pipe body 51 and the diffuse-blend space 311 of the diffuse-blend module 30 in the subsequent steps, thereby attaining an optimum energy-saving effect. In the preheating mode provided from the preheating pipeline 61 as taught in this embodiment, the preheating pipeline 61 is disposed in the diffuse-blend space 311 of the diffuse-blend module 30, and the high heat energy stored in the diffuse-blend space 311 of the diffuse-blend module 30 is utilized to preheat the fuel gas or fuel to subsequently flow into the fuel gas injection unit 52 of the premixing module 50. Accordingly, any additional external heating devices are not required in the embodiment, and purposes of effectively saving costs and promoting entire efficiency can be attained.

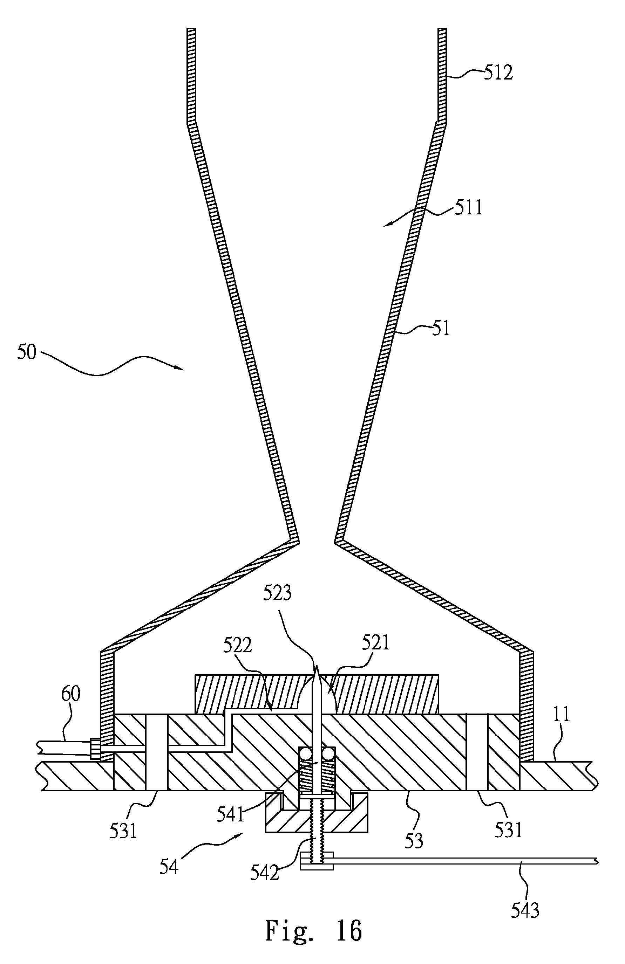

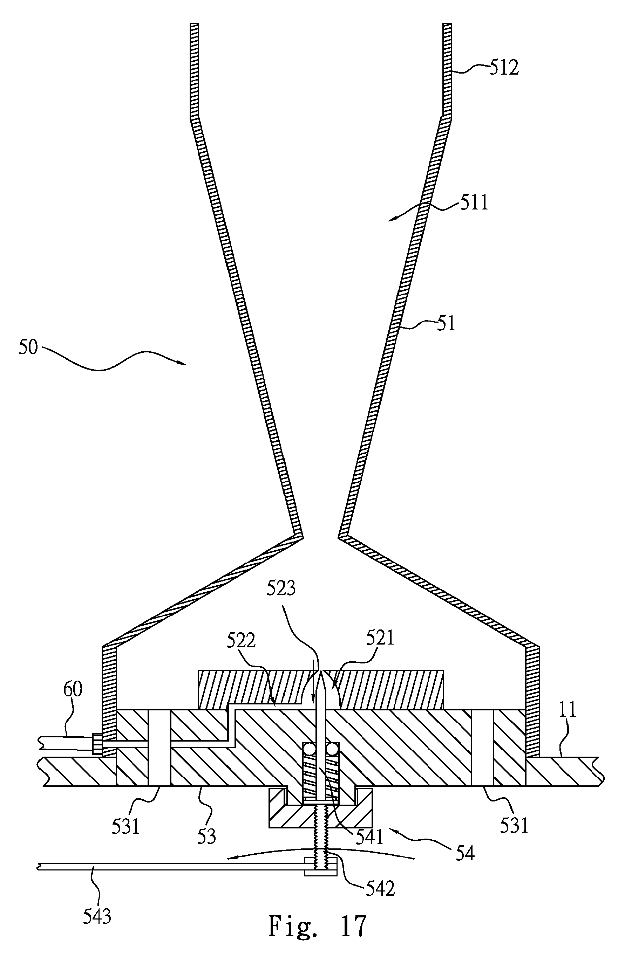

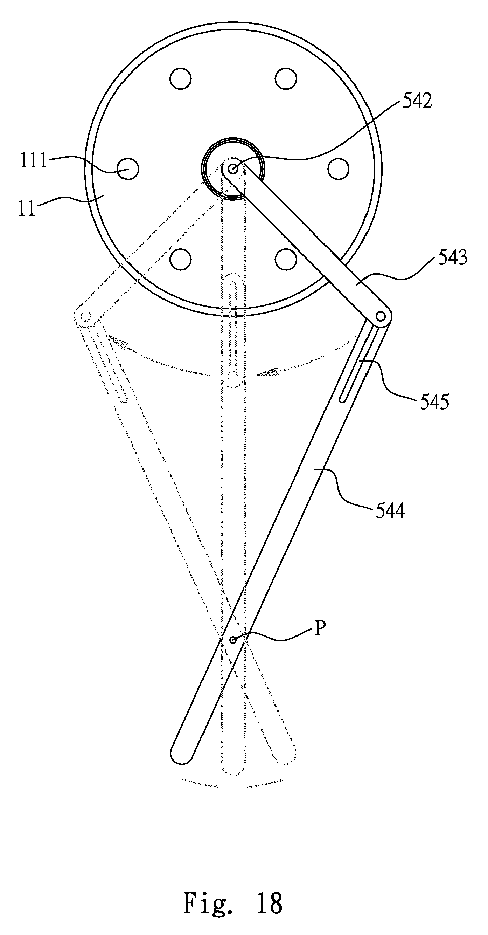

Referring also to Figs. 14, 15, 16, 17 and 18, the flow control mechanism 54 at least comprises a needle body 541, a guide bar 542 and a guide bar 543. In practice, it must be explained first that the flow control mechanism 54 can have several control and operation modes. While the flow control mechanism 54 is illustrated in these figures, it is to be understood that the invention is not limited to the disclosed embodiments. In Figs. 16 and 17, the needle body 541 is capable of being operated relative to the fuel gas injection port 523 of the fuel gas injection unit 52, the propping element 542 provided with a screw structure is utilized to prop on the bottom of the needle body 541, and the guide bar 543 fixedly connected to the propping element 542 is capable of being rotated by taking the propping element 542 as an axis. When the propping element 542 driven by the guide bar 543 is rotated, the needle body 541 can be simultaneously driven for up and down movement by the screw structure of the propping element 542, thereby acting to open or close the fuel gas injection port 523 of the fuel gas injection unit 52 or to regulate the fuel gas injection port 523 of the fuel gas injection unit 52 for controlling the flow rate of injected fuel gas. Besides, the flow control mechanism 54 can further comprise a linkage 544 provided with a fixed point 'P', so that the linkage 544 is rotated by taking the fixed point 'P' as an axis (shown in Fig. 18). The linkage 544 has a first end connected to the guide bar 543 via an elongated hole thereof and a second end connected to a finger-dialing member 546 disposed on an external control panel 70. With an appropriate proportional arrangement of between the guide bar 543 and the linkage 544, a user can conveniently open or close the fuel gas injection port or to regulate the fuel gas injection port for controlling the flow rate of injected fuel gas by controlling finger-dialing member 546 disposed on an external control panel 70 at a small span, thereby effectively promoting the usage convenience.

In conclusion, according to the principle and structure disclosed in the embodiments of the invention, it is understood that the fuel gas system of the invention provides a two coexisted mechanisms comprising the premixing mode and the diffuse-blend mode. The premixing spaces 211 and 511 of the premixing modules 20 and 50 are utilized for mixing the injected fuel gas and the air to form the suitable fuel. After being processed by the diffuse-blend module 30 for the secondary air-mixing, the mixed suitable fuel is discharged to perform the combustion reaction. Further, the combustion reaction temperature of the suitable fuel is effectively increased by the heat accumulation effect of the fire board to heat up and expand the subsequent suitable fuel, thereby thinning flammable molecule to have a maximum air-fuel ratio and producing chimney effect to break down water molecule in air into supplemental fuel and combustion assistant to attain an optimum energy-saving efficiency.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An energy-saving fuel gas system, comprising:
a premixing module, comprising a pipe body providing a premixing space therein, at least one first combustion-supporting gas inlet provided for allowing a combustion-supporting gas to flow into the pipe body, and a fuel gas injection unit disposed on one end of the pipe body and located at a first side of the premixing space of the pipe body so as to supply and inject a fuel gas into the premixing space of the pipe body and to cause the fuel gas for traveling in the premixing space of the pipe body in a helical or scroll path; and
a diffuse-blend module located at a second side of the premixing space of the premixing module relative to the fuel gas injection unit of the premixing module, comprising an upper seat body which is provided with a diffuse-blend space and a fire board which is disposed in the upper seat body, located above the diffuse-blend space and opened with a plurality of flame holes.

2. The energy-saving fuel gas system as claimed in claim 1, wherein the fuel gas injection unit of the premixing module which is disposed on one end of the pipe body of the premixing module near to a pipe wall thereof is provided with a fuel gas injection port utilized to obliquely inject the fuel gas so that the fuel gas injected into the premixing space of the pipe body travels in the helical path, and the at least one first combustion-supporting gas inlet of the premixing module disposed on the pipe wall of the pipe body of the premixing module is located below the fuel gas injection port of the fuel gas injection unit of the premixing module.

3. The energy-saving fuel gas system as claimed in claim 2, wherein an included angle ranging from 45 to 85 degrees can be formed between the fuel gas injection port of the fuel gas injection unit of the premixing module and a horizontal plane.

4. The energy-saving fuel gas system as claimed in claim 1, wherein the premixing module further comprises a disk body which is disposed on one end of the pipe body and provided with the at least one first combustion-supporting gas inlet, the fuel gas injection unit is disposed on the disk body and is provided with a fuel gas injection port, and the at least one first combustion-supporting gas inlet of the disk body is located around the fuel gas injection port of the fuel gas injection unit.

5. The energy-saving fuel gas system as claimed in claim 4, wherein the fuel gas injection unit of the premixing module is provided with a guide slot and an arcuate passage connected to a bottom of the guide slot provided for allowing the fuel gas to flow into the guide slot, and the fuel gas injection port is provided on a top of the guide slot of the fuel gas injection unit so that the fuel gas injected into the premixing space of the pipe body travels in the scroll path.

6. The energy-saving fuel gas system as claimed in claim 5, wherein the pipe body of the premixing module can be a venturi tube, and a bunch part is provided on one end of the pipe body of the premixing module which is near to the diffuse-blend space of the diffuse-blend module.

7. The energy-saving fuel gas system as claimed in claim 5, wherein the fuel gas injection port of the fuel gas injection unit is further connectively disposed with a flow control mechanism.

8. The energy-saving fuel gas system as claimed in claim 1, claim 2, or claim 5, further comprising an outer housing including a base seat opened with at least one second combustion-supporting gas inlet, in which the premixing module arranged in the outer housing is connected to the base seat of the outer housing, and the upper seat body of the diffuse-blend module is connected to the outer housing at one side thereof where is opposite to that of the base seat of the outer housing to be located.

9. The energy-saving fuel gas system as claimed in claim 1, claim 2, or claim 5, further comprising a fairing hood disposed between the premixing space of the premixing module and the diffuse-blend space of the diffuse-blend module, in which the fairing hood comprises an arcuate recessed flange concave to the diffuse-blend space of the diffuse-blend module and a fairing hole provided for allowing the fuel gas and the combustion-supporting gas to be mixed in the premixing space of the premixing module to flow into the diffuse-blend space of the diffuse-blend module.

10. The energy-saving fuel gas system as claimed in claim 1, claim 2, or claim 5, wherein the fire board can be further made of ceramic material.

11. The energy-saving fuel gas system as claimed in claim 7, wherein the flow control mechanism comprises a needle body capable of being operated relative to the fuel gas injection port of the fuel gas injection unit and a guide bar being directly or indirectly connected to the needle body, so that the needle body driven by the guide bar is acted to open or close the fuel gas injection port of the fuel gas injection unit or to regulate the fuel gas injection port of the fuel gas injection unit for controlling the flow rate of injected fuel gas.

12. The energy-saving fuel gas system as claimed in claim 11, wherein the flow control mechanism further comprises a linkage which is provided with a fixed point and two ends respectively connected to the guide bar and a finger-dialing member, so that the linkage is rotated by taking the fixed point as an axis.

13. The energy-saving fuel gas system as claimed in claim 12, wherein the guide bar is provided with an elongated hole at a location where is connected to the linkage, or the linkage is provided with an elongated hole at a location where is connected to the guide bar.

14. The energy-saving fuel gas system as claimed in claim 5 further comprising a preheating pipeline which is connected to the fuel gas injection unit for increasing the temperature of the fuel gas when the fuel gas enters the arcuate passage of the fuel gas injection unit of the premixing module.

15. The energy-saving fuel gas system as claimed in claim 14, wherein the preheating pipeline can be disposed in the diffuse-blend space of the diffuse-blend module.
